# EUROPÄISCHE PATENTSCHRIFT

(11) **EP 3 467 198 B1**
(45) Veröffentlichungstag und Bekanntmachung des Hinweises auf die Patenterteilung: **17.06.2020**
(21) Anmeldenummer: 18208999.5
(22) Anmeldetag: 25.01.2017
(51) Int. Cl.: D21B 1/32, D21B 1/34, B02C 18/00

(54) **VORRICHTUNG UND VERFAHREN ZUM VERARBEITEN EINES IN EINEM STOFFLÖSER GEBILDETEN ZOPFS**
DEVICE AND METHOD FOR PROCESSING A PLAIT FORMED IN A PULPER
DISPOSITIF ET PROCÉDÉ DE TRAITEMENT D'UN TORON FORMÉ DANS UN DÉSINTÉGRATEUR

(30) Priorität: 01.02.2016 DE 102016101712
(43) Veröffentlichungstag der Anmeldung: 10.04.2019
(62) Teilanmeldung aus: 17701484.2
(73) Patentinhaber: MERI Environmental Solutions GmbH, 81673 München (DE)
(72) Erfinder: MENKE, Lucas, 81545 München (DE); WÜNSCHE, Gisbert, 88255 Baienfurt (DE)
(74) Vertreter: Henkel & Partner mbB

(56) Entgegenhaltungen:
- EP-A1- 0 493 715
- WO-A1-2010/026295
- WO-A1-2012/062563
- DE-U1- 9 108 230

## Beschreibung

Die vorliegende Erfindung betrifft eine Vorrichtung und ein Verfahren zum Verarbeiten eines in einem Stofflöser gebildeten Zopfs mit einer Fördereinrichtung, insbesondere Winde, zum Ziehen des Zopfs mit seinem vorderen Ende voran aus dem Stofflöser.

Stofflöser werden zum Auflösen von Altpapier, Zellstoff, Karton, Pappe oder dergleichen eingesetzt und auch als Pulper bezeichnet. Ein Stofflöser weist normalerweise einen bottichartigen Behälter auf, der mit einem Lösungsmittel, wie zum Beispiel Wasser, gefüllt wird. Anschließend wird z.B. Altpapier eingebracht und mit dem Lösungsmittel intensiv vermischt, um es aufzulösen. Zum Vermischen kommt meist ein am Behälterboden des Stofflösers angeordneter Misch- und Zerkleinerungsrotor zum Einsatz.

Um die mit dem Altpapier eingetragenen Störstoffe und Verunreinigungen zu entfernen, wird in den Pulper üblicherweise ein Zopf, nämlich ein beispielsweise seilartiges Drahtbündel, gehängt. Am Zopf verspinnen sich vor allem grobe, längliche Verunreinigungen, wie zum Beispiel Folien, Packbänder oder Textilreste, die durch Herausziehen des Zopfs aus dem Behälter entfernt werden.

In der WO 2012/062563 A1 wird ein Verfahren zur Steuerung einer Zopfwinde, die einen von Verunreinigungen gebildeten Zopf aus einem Stofflöser fördert, beschrieben. Nachgeordnet zur Zopfwinde ist eine Trenneinrichtung vorgesehen, die den Zopf in einzelne Stücke schneidet.

Aus der EP 0 493 715 A1 ist eine Vorrichtung mit einem Stofflöser bzw. Pulper bekannt, in welchem ein Zopf gebildet wird, der mit einer Fördereinrichtung mit seinem vorderen Ende voran aus dem Stofflöser gezogen wird. Der Zopf 24 wird dann drei Aufbereitungseinheiten 56, 40 und 52 zugeführt, um den Zopf zu zerkleinern, wobei es sich bei den Aufbereitungseinheiten um Schneid- und Zerreißvorrichtungen und bei der Aufbereitungseinheit 52 um einen rotierenden Werkzeugträger handelt.

In der WO 2012/062563 A1 wird ein Verfahren zur Steuerung einer Zopfwinde, die einen von Verunreinigungen gebildeten Zopf aus einem Stofflöser fördert, beschrieben. Nachgeordnet zur Zopfwinde ist eine nicht näher spezifizierte Trenneinrichtung vorgesehen, die den Zopf in einzelne Stücke schneidet.

In der WO 2010/026295 A1 wird eine Vorrichtung beschrieben, bei der mit einer Fördereinrichtung ein Zopf aus einem Stofflöser zu einer nicht näher spezifizierten Schneideinnrichtung geführt wird.

Aus dem Stand der Technik ist es ferner bekannt, derartige Zopfstücke in Containern zu sammeln, um sie zu einer externen Aufbereitungsanlage zu liefern, wo sie weiterverarbeitet werden. Dabei werden die einzelnen Zopfstücke einer Zerkleinerungsvorrichtung, wie beispielsweise einem Schredder, zugeführt, in dem sie zerkleinert bzw. geschreddert werden. Das geschredderte Material kann anschließend in Metall- und Kunststoffteile und anderweitige Teile getrennt werden.

Die Handhabung von Zopfstücken ist gefährlich, da es sich hierbei um Drahtgespinste handelt, an denen sich Personen leicht verletzen können. Außerdem ist der Transport derartiger Zopfstücke aufwändig und mit zusätzlichen Kosten verbunden.

Der vorliegenden Erfindung liegt daher die Aufgabe zugrunde, eine insbesondere logistisch einfache und kostengünstige Möglichkeit zur Verarbeitung eines in einem Stofflöser gebildeten Zopfs bereitzustellen.

Erfindungsgemäß wird diese Aufgabe durch eine Vorrichtung mit den Merkmalen des Anspruchs 1 bzw. durch ein Verfahren mit den Merkmalen des Anspruchs 14 gelöst.

Erfindungsgemäß umfasst eine Vorrichtung zum Verarbeiten eines in einem Stofflöser gebildeten Zopfs eine Fördereinrichtung, insbesondere Winde, zum Ziehen des Zopfs mit seinem vorderen Ende voran aus dem Stofflöser, wobei die Fördereinrichtung so angeordnet und ausgestaltet ist, dass der Zopf mit seinem vorderen Ende voran mittels der Fördereinrichtung direkt einem Schredder zuführbar ist.

Bei der erfindungsgemäßen Vorrichtung wird somit der Zopf mittels der Fördereinrichtung nicht nur aus dem Stofflöser gezogen, um dann in kleine Stücke geschnitten zu werden, die dann aufbereitet werden. Vielmehr wird der Zopf bei der erfindungsgemäßen Vorrichtung aus dem Stofflöser gezogen und unmittelbar mit seinem vorderen Ende voran zu einem Schredder geführt. Zwischenschritte, wie sie aus dem Stand der Technik zwingend eingesetzt werden, also insbesondere das Abtrennen von einzelnen Zopfstücken am vorderen Ende, das Sammeln der Zopfstücke in Containern, der Transport der Zopfstücke zu einer externen Aufbereitungsanlage und/oder eine wie auch immer geartete Handhabung der Zopfstücke durch eine Bedienperson, werden somit bei der erfindungsgemäßen Vorrichtung vermeiden. Die Verarbeitung eines in einem Stofflöser gebildeten Zopfs kann somit deutlich einfacher, schneller, kosteneffizienter und in sicherer Weise erfolgen.

Unter direkter Zuführung des Zopfes zu dem Schredder wird im Sinne der vorliegenden Erfindung insbesondere verstanden, dass der Zopf unmittelbar von der Fördereinrichtung dem Schredder zugeführt wird, dass also gewissermaßen eine räumlich kontinuierliche Förderung des Zopfes vom Stofflöser zum Schredder erfolgt, ohne dass der Zopf dazwischen in einzelne Stücke durchtrennt oder anderweitig gehandhabt wird.

Die Zuführung des vorderen Zopfendes zum Schredder mittels der Fördereinrichtung hat außerdem den Vorteil, dass mittels der Fördereinrichtung die Zufuhrgeschwindigkeit des Zopfes zum Schredder eingestellt werden kann. Somit kann je nach aktueller Auslastung des Schredders das vordere Zopfende schneller oder langsamer dem Schredder zugeführt werden. Eine Überlastung oder Unterlastung des Schredders kann dadurch vermieden werden.

Gemäß einer ganz besonders bevorzugten Ausführungsform der vorliegenden Erfindung umfasst die Vorrichtung als Schredder einen 2-Wellen-Schredder. Erfindungsgemäß wurde erkannt, dass sich 2-Wellen-Schredder besonders gut zum Zerkleinern bzw. zum Schreddern von Zöpfen aus einem Stofflöser eignen. Im Vergleich zu einem 1-Wellen-Schredder sind sie normalerweise weniger störungs- und reparaturanfällig. Außerdem kann im Vergleich zu einem 1-Wellen-Schredder ein höherer Durchsatz erreicht und es können auch gröbere Materialen geschreddert werden.

Vorzugsweise weist der 2-Wellen-Schredder zwei, insbesondere gegenläufig, rotierend antreibbare, zumindest im Wesentlichen parallele Wellen mit Schneidelementen zum Schreddern des Zopfs auf. Dabei können die Schneidelemente auf jeder Welle in einer Reihe angeordnet sein. Zwischen benachbarten Schneidelementen einer Welle können Distanzscheiben angeordnet sein, so dass zwischen benachbarten Schneidelementen derselben Welle ein Freiraum entsteht. Die Schneidelemente einer Welle sind vorzugsweise in axialer Richtung gesehen versetzt zu den Schneidelementen der anderen Welle angeordnet, so dass sich die Schneidelemente der einen Welle und die Distanzscheiben der anderen Welle gegenüberstehen. Ein jeweiliges Schneidelement der einen Welle kann somit in einen Freiraum zwischen benachbarten Schneidelementen der anderen Welle eingreifen bzw. den Freiraum durchlaufen, wenn die Wellen rotierend angetrieben werden. Im Betrieb des Schredders laufen die Schneidelemente der beiden Wellen somit in dem zwischen den beiden Wellen liegenden Bereich aneinander vorbei. Dabei wirken aneinander vorbeilaufende Schneidelemente in Art einer Schere zusammen, um die durch den Bereich hindurchgeförderten Materialen in Klein- und Kleinstteile zu durchtrennen.

Im Gegensatz dazu wird bei einem 1-Wellen-Schredder zugeführtes Material zwischen einer Welle und einem festen Stator hindurchgefördert. Die Zerlegung in Kleinteile erfolgt typischerweise dadurch, dass zugeführtes Material am Stator hängen bleibt und die sich drehende Welle das Material auseinanderzieht und somit in Kleinteile zerreißt. Bei einem 1-Wellen-Schredder sind die Schneidelemente normalerweise auch einstückig mit der Welle ausgebildet.

Bei dem 2-Wellen-Schredder können die Schneidelemente von den Wellen demontierbar sein. Die Schneidelemente können somit von der Welle abgenommen und gewartet, insbesondere nachgeschliffen, werden. Die Betriebskosten lassen sich dadurch senken, insbesondere im Vergleich zu einem 1-Wellen-Schredder, bei dem die Schneidelemente in die Welle integriert sind, so dass die komplette Welle ausgetauscht werden muss, sobald die Schneidelemente zerschlissen sind.

Die Schneidelemente können austauschbar sein. Durch Austauschen von Schneidelementen lassen sich unterschiedliche Zerkleinerungsgrade realisieren. Außerdem ist es nicht erforderlich, bei vollständig zerschlissenen Schneidelementen die gesamte Welle auszutauschen. Die Betriebskosten können somit gering gehalten werden.

Es können aber auch die Wellen austauschbar sein. Der Austausch einer kompletten Welle kann verhältnismäßig schnell durchgeführt werden. Standzeiten können somit kurz gehalten werden.

Die Fördereinrichtung kann insbesondere so angeordnet und ausgestaltet sein, dass das vordere Zopfende einem Bereich des Schredders, welcher zwischen den beiden Wellen liegt, zuführbar ist. Das vordere Zopfende kann durch die sich gegenläufig drehenden Wellen in den sogenannten Schredderbereich zwischen den beiden Wellen gezogen und von den Schneidelementen durchtrennt werden.

Der Schredder ist vorzugsweise derart angeordnet, dass die Wellen zumindest im Wesentlichen parallel zu einer Richtung verlaufen, längs der das vordere Zopfende dem Schredder zugeführt wird. Die Längserstreckung des zugeführten vorderen Zopfendes verläuft somit parallel zu den Wellen. Das vordere Zopfende kann somit besonders gut von den gegenläufig rotierenden Wellen erfasst und zum Schreddern in den Schredderbereich gezogen werden.

Für jede Welle kann ein eigener Antrieb, insbesondere elektrischer oder hydraulischer Antrieb, vorgesehen sein, wobei die Antriebe vorzugsweise unabhängig voneinander betreibbar sind. Die Wellen lassen sich daher individuell und unabhängig voneinander betreiben. Insbesondere können die Wellen mit unterschiedlichen Umlaufgeschwindigkeiten betrieben werden. Ferner kann die Umlaufrichtung einer Welle wenigstens kurzzeitig geändert werden, während die Umlaufrichtung der anderen Welle beibehalten wird.

Durch die Verwendung von elektrischen oder hydraulischen Antrieben können leistungsstarke und robuste Antriebe für die Wellen bereitgestellt werden. Ein hydraulischer Antrieb lässt sich kompakt ausgestalten und kann ein verhältnismäßig hohes Drehmoment bereitstellen, welches sich zudem gut kontrollieren bzw, steuern lässt. Ein Elektromotor ist verhältnismäßig günstig und auch leiser als ein Hydraulikantrieb.

Nach einer weiteren bevorzugten Ausgestaltung der Erfindung umfasst die erfindungsgemäße Vorrichtung eine Steuerung für die Fördereinrichtung, wobei die Steuerung dazu ausgebildet ist, die Fördergeschwindigkeit und/oder die Förderrichtung des Zopfs in Abhängigkeit von wenigstens einem Betriebsparameter des Schredders einzustellen. Eine Überlastung oder Unterlastung des Schredders kann durch entsprechende Einstellung der Fördergeschwindigkeit und/oder der Förderrichtung des Zopfs vermieden werden.

Insbesondere kann es vorgesehen sein, dass die Steuerung die Fördergeschwindigkeit des Zopfes primär in Abhängigkeit von wenigstens einem in Bezug zu dem Stofflöser stehenden Parameter einstellt, Der Zopf kann beispielsweise kontinuierlich aus dem Stofflöser gezogen werden, wobei die Fördergeschwindigkeit von der Menge an Material, die sich am Zopf anlagert, abhängig ist. Sekundär können die Fördergeschwindigkeit und/oder eventuell sogar die Förderrichtung des Zopfes in Abhängigkeit von dem Betriebsparameter des Schredders eingestellt werden. Dies kann beispielsweise dadurch realisiert werden, dass anhand des Betriebsparameters des Schredders ein Offsetwert bestimmt wird, um welchen je nach Vorzeichen des Offsetwerts die aktuelle Fördergeschwindigkeit erhöht bzw. erniedrigt wird.

Mit Einstellen der Förderrichtung ist insbesondere gemeint, dass das vordere Ende des Zopfes normalerweise in Richtung des Schredders gefördert wird. Zum Beispiel bei einer starken Überlastung des Schredders kann es ausnahmsweise aber auch vorgesehen sein, dass das vordere Ende des Zopfes zumindest kurzzeitig vom Schredder weggezogen wird, um diesen zu entlasten.

Bei dem Betriebsparameter handelt es sich insbesondere um den hydraulischen Druck des hydraulischen Antriebs des Schredders und/oder um das Drehmoment an einer Welle des Schredders und/oder um einen elektrischen Parameter, insbesondere Strom oder Spannung, des elektrischen Antriebs des Schredders. Durch Messung eines der genannten Betriebsparameter kann auf einfache Weise die momentane Auslastung des Schredders ermittelt werden.

Die Vorrichtung kann eine Messeinrichtung zur Messung des hydraulischen Drucks und/oder zur Messung des Drehmoments und/oder zur Messung des elektrischen Parameters aufweisen. Der von der Messeinrichtung ermittelte Messwert kann der Steuerung für die Fördereinrichtung bereitgestellt werden.

Vorzugsweise weist die Fördereinrichtung eine Winde mit einer antreibbaren Rolle und einer Gegenrolle auf und ist so ausgestaltet, dass der Zopf zwischen der Rolle und der Gegenrolle hindurch gefördert wird. Durch eine derartige Winde kann eine einfache, kostengünstige und robuste Fördereinrichtung für den Zopf bereitgestellt werden.

Bevorzugt umfasst die erfindungsgemäße Vorrichtung einen Stofflöser, wobei die Fördereinrichtung oberhalb des Stofflösers und zwischen dem Stofflöser und dem Schredder angeordnet ist, insbesondere ohne dass zwischen der Fördereinrichtung und dem Schredder eine Schneidvorrichtung, insbesondere Schere oder dergleichen, zur Abtrennung des vorderen Zopfendes vom restlichen Zopf vorgesehen ist.

Bei dem Stofflöser kann es sich insbesondere um einen sog. LC-Pulper oder um einen sogenannten HC-Pulper handeln. HC-Pulper werden normalerweise bei einer Konzentration von ca. 10% +/- 2% an gelösten Stoffen im verwendeten Lösungsmittel, wie etwa Wasser, betrieben. Sie werden zum Beispiel zum Auflösen von braunen Altpapieren verwendet, wie sie in der Herstellung von Kartonanlagen zum Einsatz kommen. LC-Pulper werden demgegenüber bei niedrigeren Konzentrationen von im Lösungsmittel aufgelösten Stoffen betrieben.

Die erfindungsgemäße Vorrichtung kann zwischen der Fördereinrichtung und dem Schredder eine Führungseinrichtung, insbesondere eine Rutsche, zur Führung des vorderen Zopfendes aufweisen. Das vordere Ende des Zopfs kann somit in Richtung Schredder zwangsgeführt sein, um das vordere Zopfende dem Schredder in einer gewünschten Richtung zuzuführen. Beispielweise kann mittels der Führungseinrichtung sichergestellt werden, dass das vordere Zopfende längs einer Richtung zugeführt wird, die sich im Wesentlichen parallel zu den Wellen eines 2-Wellen-Schredders erstreckt.

Die Umlaufgeschwindigkeit und/oder die Umlaufrichtung von wenigstens einer Welle des Schredders können in Abhängigkeit von dem Drehmoment auf die Welle und/oder des Hydraulikdrucks des Antriebs der Welle eingestellt werden. Eine Über- oder Unterlastung des Schredders kann dadurch vermieden werden.

Vorzugsweise ist eine Messeinrichtung zur Messung des Drehmoments und/oder zur Messung des Hydraulikdrucks vorgesehen.

Dem Schredder kann ein weiterer Schredder, insbesondere 2-Wellen-Schredder, nachgeordnet ist. Durch zwei hintereinander angeordnete Schredder kann ein verhältnismäßig hoher Zerkleinerungsgrad für das geschredderte Material erreicht werden.

Die Erfindung betrifft ferner ein Verfahren zum Verarbeiten eines in einem Stofflöser gebildeten Zopfs, insbesondere mittels einer erfindungsgemäßen Vorrichtung, wobei der Zopf mit seinem vorderen Ende voran mittels einer Fördereinrichtung für den Zopf, insbesondere einer Winde, aus dem Stofflöser gezogen wird, und wobei der Zopf mit seinem vorderen Ende voran mittels der Fördereinrichtung direkt einem Schredder zugeführt wird.

Der Zopf wird vorzugsweise mit seinem vorderen Ende voran mittels der Fördereinrichtung direkt einem 2-Wellen-Schredder zugeführt.

Vorzugsweise wird wenigstens ein Betriebsparameter des Schredders gemessen und die Fördergeschwindigkeit und/oder die Förderrichtung des Zopfs werden in Abhängigkeit von dem wenigstens einen Betriebsparameter eingestellt.

Nachfolgend wird die vorliegende Erfindung beispielhaft unter Bezugnahme auf die Zeichnungen beschrieben. Es zeigen, jeweils schematisch,
- Fig. 1: eine seitliche Ansicht einer erfindungsgemäßen Vorrichtung,
- Fig. 2: eine perspektivische Ansicht der Vorrichtung von Fig. 1,
- Fig. 3: eine perspektivische teilweise Darstellung eines 2-Wellen-Schredders der Vorrichtung von Fig. 1,
- Fig. 4: eine weitere teilweise Darstellung des Schredders von Fig. 3,
- Fig.: 5 eine schematische Darstellung zur Erläuterung des Funktionsprinzips des Schredders von Fig. 3 und
- Fig. 6: ein Blockdiagramm der Vorrichtung von Fig. 1.

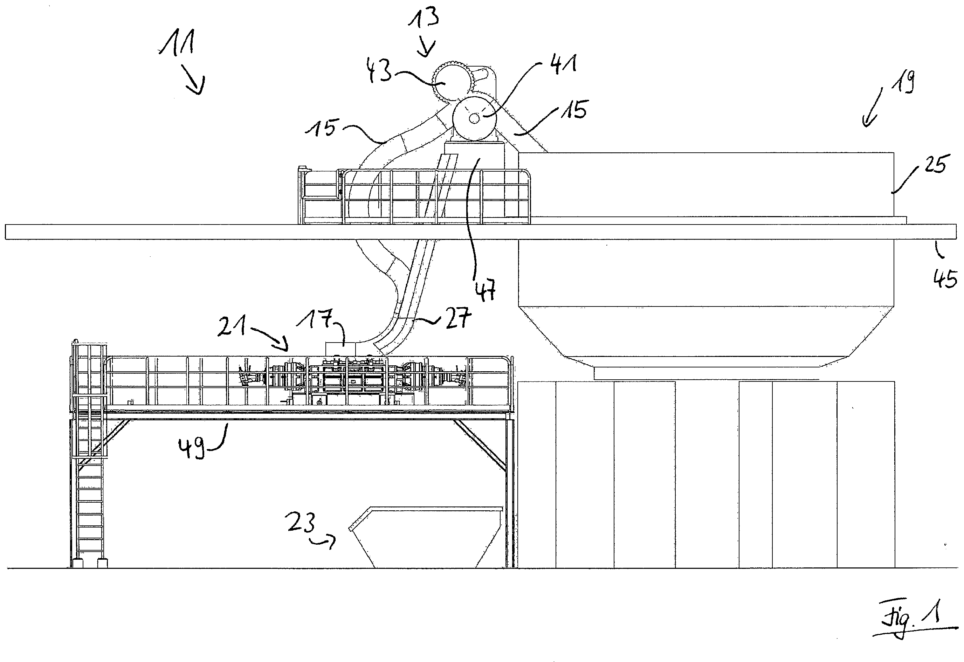

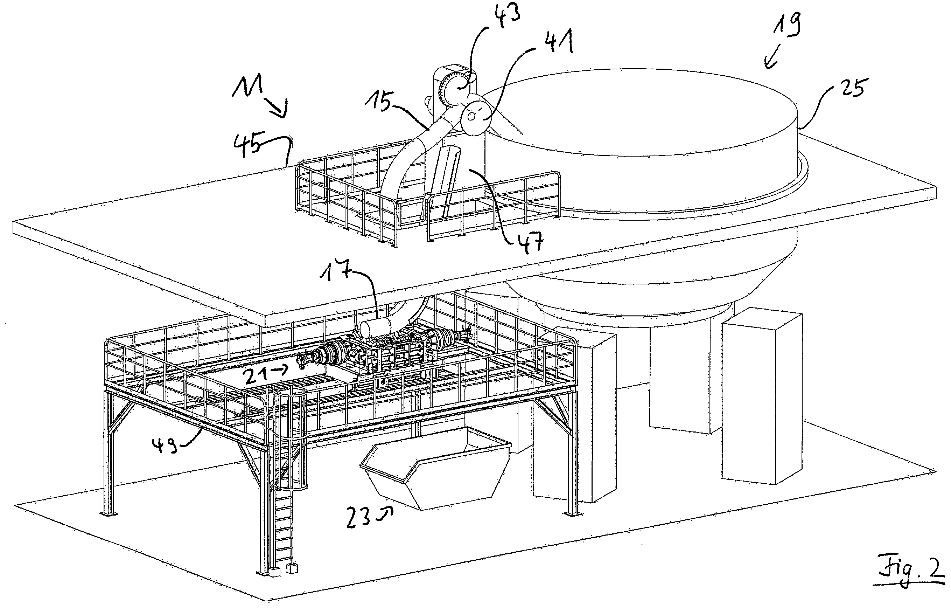

Die in den Figuren 1 und 2 gezeigte Vorrichtung 11 umfasst eine Fördereinrichtung 13 zum Ziehen eines Zopfs 15 mit seinem vorderen Ende 17 voraus aus einem Stofflöser 19. Die Fördereinrichtung 13 ist dabei so angeordnet und ausgestaltet, dass der Zopf 15 mit seinem vorderen Ende 17 voran mittels der Fördereinrichtung 13 direkt einem Schredder 21 zuführbar ist.

Der Stofflöser 19, der auch als Pulper bezeichnet wird, weist einen bottichartigen, oben offenen Behälter 25 auf, der mit Wasser gefüllt ist und in den das zum Auflösen vorgesehene Material, wie etwa Altpapier, Zellstoff, Karton oder Pappe eingebracht und mit dem Wasser intensiv vermischt wird, um es aufzulösen. Dabei kann zum Vermischen ein am Boden des Behälters angeordneter Misch- und Zerkleinerungsrotor (nicht gezeigt) zum Einsatz kommen.

Wie die Figuren 1 und 2 zeigen, hängt der Zopf 15 in den Behälter hinein. Bei dem Zopf 15 handelt es sich um ein seilartiges Drahtbündel, an dem sich vor allem grobe, nicht lösliche Verunreinigungen, wie beispielsweise Folien, Packbänder oder Textilreste, verspinnen.

Die Fördereinrichtung 13 ist als Winde ausgebildet und umfasst eine angetriebene Rolle 41 und eine Gegenrolle 43, wobei der Zopf 15 zwischen der Rolle 41 und der Gegenrolle 43 hindurchgefördert wird.

Wie die Figuren 1 und 2 außerdem zeigen, ist die Fördereinrichtung 13 oberhalb des Stofflösers 19 angeordnet und - zumindest in funktioneller Hinsicht - zwischen dem Stofflöser 19 und dem Schredder 21, so dass das vordere Zopfende 17 mittels der Fördereinrichtung 13 nicht nur aus dem Stofflöser 19 gezogen, sondern auch dem Schredder 21 zugeführt werden kann.

Bei der in den Figuren 1 und 2 dargestellten Vorrichtung 11 ist eine obere Plattform 45 vorgesehen, durch die der Behälter 25 hindurchragt. Die Fördereinrichtung 13 ist auf einem Sockel 47 angeordnet, der auf der oberen Plattform 45 steht. Die Fördereinrichtung 13 befindet sich dabei seitlich neben und oberhalb der Behälteröffnung, um den Zopf 15 aus dem Behälter 25 herausziehen zu können.

Der Schredder 21 ist auf einem Gestell 49 unterhalb der Plattform 45 angeordnet. Das unten aus dem Schredder 21 herausfallende, geschredderte Material fällt in einen unterhalb des Schredders 21 bzw. unterhalb des Gestells 49 aufgestellten Container 23.

Die Fördergeschwindigkeit, mit der die Fördereinrichtung 13 den Zopf 15 aus dem Behälter zieht, kann derart eingestellt werden, dass ein vernünftiges Anspinnen von Verschmutzungen an dem Zopf möglich wird, ohne dass der Zopf 15 zu groß wird. Die Fördergeschwindigkeit kann somit primär mit dem Anspinnen von Material am Zopf 15 im Stofflöser 19 in Zusammenhang stehen.

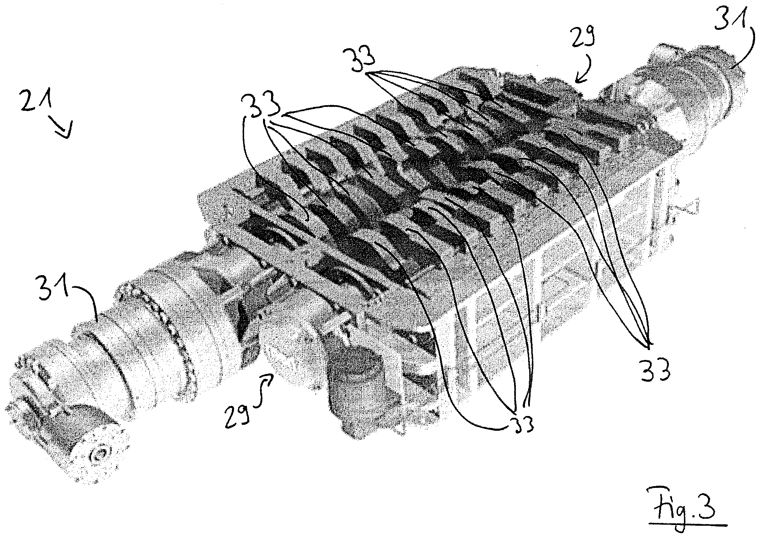

Zwischen der Fördereinrichtung 13 und dem Schredder 21 ist eine in Form einer Rutsche ausgebildete Führungseinrichtung 27 angeordnet, die die Zuführung des vorderen Zopfendes 17 zum Schredder unterstützt, und zwar so, dass das vordere Zopfende 17 zumindest im Wesentlichen parallel zu zwei parallel verlaufenden Wellen 29 des Schredders 21 (vgl. Fig. 3) zugeführt wird.

Der Schredder 21 ist somit als 2-Wellen-Schredder ausgebildet. Jeder Welle 29 ist ein eigener hydraulischer Antrieb 31 zugeordnet, der die jeweilige Welle 29 rotierend antreiben kann. Alternativ kann der Antrieb 31 auch als elektrischer Antrieb ausgestaltet sein.

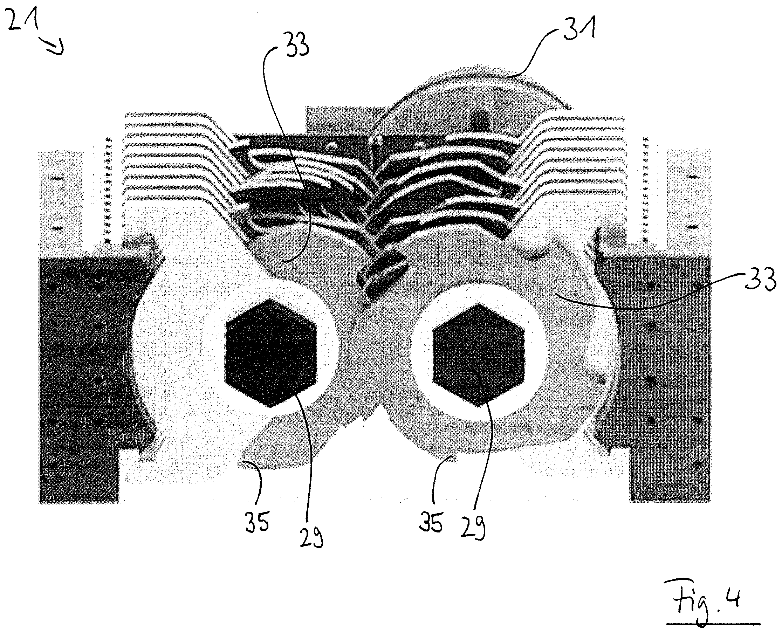

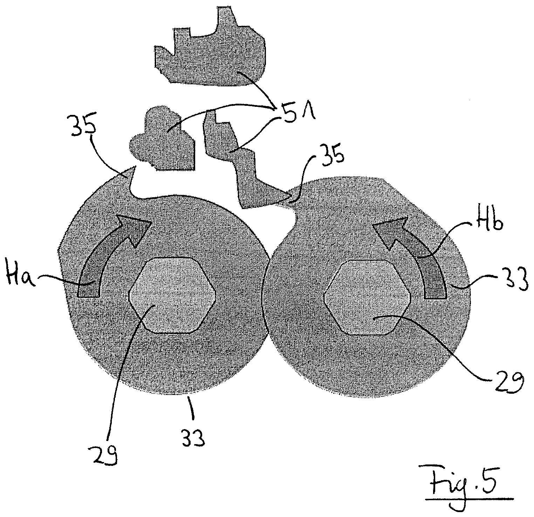

Auf jeder Welle 29 des Schredders 21 sind Schneidelemente 33 angeordnet, wobei zwischen benachbarten Schneidelementen 33 einer Welle jeweils wenigstens eine Distanzscheibe angeordnet ist. Benachbarte Schneidelemente 33 einer Welle sind somit voneinander beabstandet. Die Schneidelemente 33 der beiden Wellen 29 sind in axialer Richtung gesehen versetzt zueinander angeordnet, so dass ein jeweiliges Schneidelement 33 einer Welle einer jeweiligen Distanzscheibe der anderen Welle gegenübersteht. Die Schneidelemente 33 der einen Welle 29 greifen somit in die mittels der Distanzscheiben der anderen Welle 29 geschaffenen Freiräume ein. Wie die Querschnittsansichten der Fig. 4 und 5 zeigen, überlappt somit die Querschnittsfläche eines Schneidelements 33 der einen Welle 29 mit der Querschnittsfläche des benachbarten Schneidelements 33 der anderen Welle 29 im Bereich zwischen den beiden Wellen 29. Bei sich gegenläufig drehenden Wellen 29 laufen die Schneidelemente 33 der beiden Wellen 29 somit aneinander vorbei und durchtrennen bzw. schreddern dabei Material 51 (vgl. Fig. 5), das zwischen den beiden Wellen 29 hindurchgefördert wird.

Jedes Schneidelement 33 weist an seinem Außenumfang wenigstens einen hakenartigen Vorsprung 35 auf, dessen Spitze in Richtung der jeweiligen Hauptumlaufrichtung der jeweiligen Welle 29 gerichtet ist. Wie Fig. 5 anhand der Pfeile zeigt, verläuft die Hauptumlaufrichtung Ha für die linke Welle 29 im Uhrzeigersinn, während die Hauptumlaufrichtung Hb für die rechte Welle 29 entgegengesetzt zum Uhrzeigersinn verläuft.

Wenn die Wellen 29 in ihrer jeweiligen Hauptumlaufrichtung Ha, Hb gegenläufig umlaufen, kann das zugeführte Material 51, insbesondere mittels wenigstens eines Vorsprungs 35, von den Wellen 29 erfasst und in den Schredderbereich zwischen den beiden Wellen 29 gezogen und geschreddert werden.

Aufgrund der separaten Antriebe 31 für die Wellen 29 kann die Umlaufrichtung Ha, Hb wenigstens einer Welle 29 kurzzeitig umgekehrt werden. Dies kann insbesondere erfolgen, wenn kurzzeitig sehr viel Material 51 zugeführt wird. Durch Umkehrung der Umlaufrichtung kann das Material 51 aus dem Schredderbereich zwischen den beiden Wellen 29 nach oben gefördert werden, um den Schredder 21 zu entlasten.

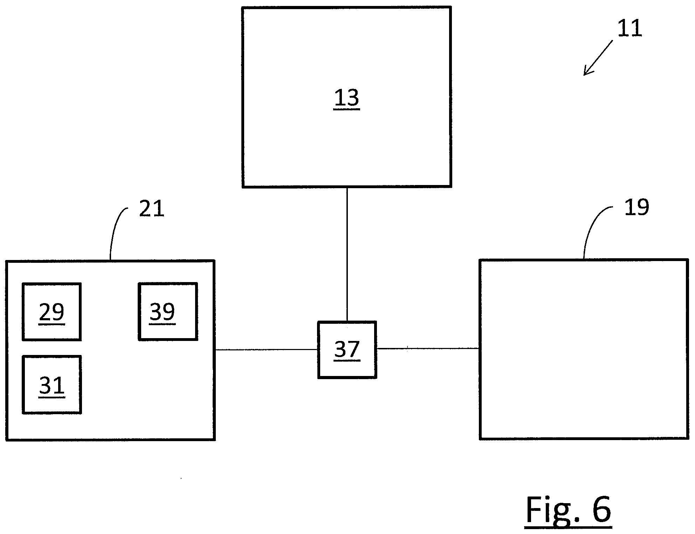

Mittels einer Steuerung 37 (vgl. Fig. 6) für die Fördereinrichtung 13 kann die Fördergeschwindigkeit des Zopfes 15 ferner in Abhängigkeit von einem Betriebsparameter des Schredders 21 einstellt werden. Dadurch können beispielsweise eine Über- und Unterlastung des Schredders 21 vermieden werden.

Bei dem Betriebsparameter kann es sich beispielsweise um den hydraulischen Druck eines der hydraulischen Antriebe 31 für die Wellen 29 oder um das Drehmoment an einer der Wellen 29 handeln. Zur Messung des Drehmoments bzw. des hydraulischen Drucks kann im Schredder 21 eine Messeinrichtung 39 angeordnet sein, welche einen entsprechenden Messwert an die Steuerung 37 liefert.

Wenn beispielsweise der hydraulische Druck oder das Drehmoment einen bestimmten, vorgegebenen Schwellwert überschreitet, kann dies als Anzeichen dafür gewertet werden, dass der Schredder 21 stark belastet ist. Daraufhin kann die Steuerung 37 durch entsprechende Ansteuerung der Fördereinrichtung 13 die Fördergeschwindigkeit des Zopfs 15 reduzieren. In Ausnahmefällen kann die Förderrichtung des Zopfes 15 auch umgekehrt werden, um das vordere Ende 17 des Zopfes 15 aus dem Schredder 21 zu ziehen. Wenn demgegenüber der gemessene hydraulische Druck oder das gemessene Drehmoment einen weiteren vorgegebenen, niedrigeren Schwellwert unterschreitet, kann dies als Anzeichen dafür gewertet werden, dass der Schredder 21 unterlastet ist. Die Fördergeschwindigkeit des Zopfes 15 kann durch entsprechende Ansteuerung der Fördereinrichtung 13 sodann erhöht werden.

Dem Schredder 21 kann ein weiterer, zweiter Schredder nachgeordnet sein (nicht gezeigt), um die mittels des Schredders 21 zerkleinerten Teile noch weiter zu zerkleinern.

### Bezugszeichenliste

- 11: Vorrichtung
- 13: Fördereinrichtung
- 15: Zopf
- 17: vorderes Zopfende
- 19: Stofflöser
- 21: Schredder
- 23: Container
- 25: Behälter
- 27: Führungseinrichtung
- 29: Welle
- 31: Antrieb
- 33: Schneidelement
- 35: Vorsprung
- 37: Steuerung
- 39: Messgerät
- 41: Rolle
- 43: Gegenrolle
- 45: Plattform
- 47: Sockel
- 49: Gestell
- 51: Material
- Ha: Hauptumlaufrichtung
- Hb: Hauptumlaufrichtung

## Patentansprüche

1. Vorrichtung zum Verarbeiten eines in einem Stofflöser (19) gebildeten Zopfs (15) mit einem Stofflöser (19), einem Schredder (21) sowie einer Fördereinrichtung (13), insbesondere Winde, zum Ziehen des Zopfs (15) mit seinem vorderen Ende (17) voran aus dem Stofflöser (19), wobei die Fördereinrichtung (13) so angeordnet und ausgestaltet ist, dass der Zopf (15) mit seinem vorderen Ende (17) voran mittels der Fördereinrichtung (13) direkt dem Schredder (21) zuführbar ist, wobei die Fördereinrichtung (13) oberhalb des Stofflösers (19) und zwischen dem Stofflöser (19) und dem Schredder (21) angeordnet ist.

2. Vorrichtung nach Anspruch 1,
**dadurch gekennzeichnet, dass**
der Schredder (21) ein 2-Wellen-Schredder ist.

3. Vorrichtung nach Anspruch 2,
**dadurch gekennzeichnet, dass**
der 2-Wellen-Schredder (21) zwei, insbesondere gegenläufig, rotierend antreibbare, zumindest im Wesentlichen parallele Wellen (29) mit Schneidelementen (33) zum Schreddern des Zopfs (15) aufweist.

4. Vorrichtung nach Anspruch 3,
**dadurch gekennzeichnet, dass**
die Schneidelemente (33) von den Wellen (29) demontierbar und/oder austauschbar sind, und/oder
dass die Wellen (29) des Schredders (21) austauschbar sind.

5. Vorrichtung nach zumindest einem der Ansprüche 2 bis 4,
**dadurch gekennzeichnet, dass**
das vordere Zopfende (17) einem Bereich des Schredders (21), welcher zwischen den beiden Wellen (29) liegt, zuführbar ist, und/oder der Schredder (21) derart angeordnet ist, dass die Wellen (29) zumindest im Wesentlichen parallel zu einer Richtung verlaufen, längs der das vordere Zopfende (17) dem Schredder (21) zugeführt wird.

6. Vorrichtung nach zumindest einem der Ansprüche 2 bis 5,
**dadurch gekennzeichnet, dass**
für jede Welle (29) ein eigener Antrieb (31), insbesondere elektrischer oder hydraulischer Antrieb, vorgesehen ist, wobei, bevorzugt, die Antriebe (31) unabhängig voneinander betreibbar sind.

7. Vorrichtung nach zumindest einem der vorhergehenden Ansprüche,
**dadurch gekennzeichnet, dass**
diese eine Steuerung (37) für die Fördereinrichtung (13) aufweist, wobei die Steuerung (37) dazu ausgebildet ist, die Fördergeschwindigkeit und/oder die Förderrichtung des Zopfs (15) in Abhängigkeit von wenigstens einem Betriebsparameter des Schredders (21) einzustellen.

8. Vorrichtung nach Anspruch 7,
**dadurch gekennzeichnet, dass**
es sich bei dem Betriebsparameter um den hydraulischen Druck des hydraulischen Antriebs (31) des Schredders (21) und/oder um das Drehmoment an einer Welle (29) des Schredders (31) und/oder um einen elektrischen Parameter, insbesondere Strom oder Spannung, des elektrischen Antriebs (31) des Schredders (21) handelt.

9. Vorrichtung nach Anspruch 8,
**dadurch gekennzeichnet, dass**
diese eine Messeinrichtung (39) zur Messung des hydraulischen Drucks und/oder zur Messung des Drehmoments und/oder zur Messung des elektrischen Parameters aufweist.

10. Vorrichtung nach zumindest einem der vorhergehenden Ansprüche,
**dadurch gekennzeichnet, dass**
die Fördereinrichtung (13) eine Winde mit einer antreibbaren Rolle und einer Gegenrolle aufweist und so ausgestaltet ist, dass der Zopf (15) zwischen der Rolle und der Gegenrolle hindurch gefördert wird.

11. Vorrichtung nach zumindest einem der vorhergehenden Ansprüche,
**dadurch gekennzeichnet, dass**
zwischen der Fördereinrichtung (13) und dem Schredder (21) keine Schneidvorrichtung zur Abtrennung des vorderen Zopfendes (17) vom restlichen Zopf (15) vorgesehen ist.

12. Vorrichtung nach zumindest einem der vorhergehenden Ansprüche,
**dadurch gekennzeichnet, dass**
diese zwischen der Fördereinrichtung (13) und dem Schredder (21) eine Führungseinrichtung (27), insbesondere eine Rutsche, zur Führung des vorderen Zopfendes (17) aufweist.

13. Vorrichtung nach zumindest einem der vorhergehenden Ansprüche,
**dadurch gekennzeichnet, dass**
die Umlaufgeschwindigkeit und/oder die Umlaufrichtung von wenigstens einer Welle (29) des Schredders (21) in Abhängigkeit von dem Drehmoment auf die Welle (29) und/oder des Hydraulikdrucks des Antriebs (31) der Welle (29) eingestellt wird, wobei, bevorzugt, eine Messeinrichtung (39) zur Messung des Drehmoments und/oder zur Messung des Hydraulikdrucks vorgesehen ist.

14. Vorrichtung nach zumindest einem der vorhergehenden Ansprüche,
**dadurch gekennzeichnet, dass**
dem Schredder (21) ein weiterer Schredder, insbesondere 2-Wellen-Schredder, nachgeordnet ist.

15. Verfahren zum Verarbeiten eines in einem Stofflöser (19) gebildeten Zopfs (15), insbesondere mittels einer Vorrichtung (11) nach zumindest einem der vorhergehenden Ansprüche, wobei der Zopf (15) mit seinem vorderen Ende (17) voran mittels einer Fördereinrichtung (13) für den Zopf (15), insbesondere einer Winde, aus dem Stofflöser (19) gezogen wird,
**dadurch gekennzeichnet, dass**
der Zopf (15) mit seinem vorderen Ende (17) voran mittels der Fördereinrichtung (13) direkt einem Schredder (21) zugeführt wird.

## Claims

1. Device for processing a rope (15) formed in a pulper (19), comprising a pulper (19), a shredder (21) and a conveying apparatus (13), in particular a winch, for pulling the rope (15), with its front end (17) first, out of the pulper (19), wherein the conveying apparatus (13) is arranged and designed such that the rope (15) can be fed, with its front end (17) first, directly to the shredder (21) by means of the conveying apparatus (13), wherein the conveying apparatus (13) is arranged above the pulper (19) and between the pulper (19) and the shredder (21).

2. Device according to claim 1, **characterized in that** the shredder (21) is a two-shaft shredder.

3. Device according to claim 2, **characterized in that** the two-shaft shredder (21) has two at least substantially parallel shafts (29) that are rotatable, in particular in opposite directions, and comprise cutting elements (33) for shredding the rope (15).

4. Device according to claim 3, **characterized in that** the cutting elements (33) are removable from the shafts (29) and/or exchangeable, and/or **in that** the shafts (29) of the shredder (21) are exchangeable.

5. Device according to at least one of claims 2 to 4, **characterized in that** the front rope end (17) can be fed to a region of the shredder (21) located between the two shafts (29), and/or the shredder (21) is arranged such that the shafts (29) extend at least substantially in parallel with a direction along which the front rope end (17) is fed to the shredder (21).

6. Device according to at least one of claims 2 to 5, **characterized in that** a separate drive (31), in particular an electric or hydraulic drive, is provided for each shaft (29), it preferably being possible to operate the drives (31) independently of one another.

7. Device according to at least one of the preceding claims, **characterized in that** it has a controller (37) for the conveying apparatus (13), the controller (37) being designed to set the conveying speed and/or the conveying direction of the rope (15) according to at least one operating parameter of the shredder (21).

8. Device according to claim 7, **characterized in that** the operating parameter is the hydraulic pressure of the hydraulic drive (31) of the shredder (21) and/or the torque on one shaft (29) of the shredder (31) and/or an electric parameter, in particular current or voltage, of the electric drive (31) of the shredder (21).

9. Device according to claim 8, **characterized in that** it has a measuring apparatus (39) for measuring the hydraulic pressure and/or for measuring the torque and/or for measuring the electric parameter.

10. Device according to at least one of the preceding claims, **characterized in that** the conveying apparatus (13) has a winch comprising a drivable roller and a counter roller and is designed such that the rope (15) is conveyed between the roller and the counter roller.

11. Device according to at least one of the preceding claims, **characterized in that** a cutting device for separating the front rope end (17) from the rest of the rope (15) is not provided between the conveying apparatus (13) and the shredder (21).

12. Device according to at least one of the preceding claims, **characterized in that**, between the conveying apparatus (13) and the shredder (21), said device has a guide apparatus (27), in particular a chute, for guiding the front rope end (17).

13. Device according to at least one of the preceding claims, **characterized in that** the rotational speed and/or the rotational direction of at least one shaft (29) of the shredder (21) is set according to the torque on the shaft (29) and/or the hydraulic pressure of the drive (31) of the shaft (29), a measuring apparatus (39) preferably being provided for measuring the torque and/or for measuring the hydraulic pressure.

14. Device according to at least one of the preceding claims, **characterized in that** a further shredder, in particular a two-shaft shredder, is arranged downstream of the shredder (21).

15. Method for processing a rope (15) formed in a pulper (19), in particular by means of a device (11) according to at least one of the preceding claims, the rope (15) being pulled, with its front end (17) first, out of the pulper (19) by means of a conveying apparatus (13) for the rope (15), in particular a winch, **characterized in that** the rope (15) is fed, with its front end (17) first, directly to a shredder (21) by means of the conveying apparatus (13).

## Revendications

1. Dispositif de traitement d'un toron (15) formé dans un désintégrateur (19), comportant un désintégrateur (19), un déchiqueteur (21) ainsi qu'un dispositif de transport (13), en particulier un tire-toron, destiné à tirer le toron (15) par son extrémité avant (17) hors du désintégrateur (19), dans lequel le dispositif de transport (13) est disposé et conçu de sorte que le toron (15) peut être transporté par son extrémité avant (17) au moyen du dispositif de transport (13) et introduit directement dans un déchiqueteur (21), le dispositif de transport (13) étant disposé au-dessus du désintégrateur (19) et entre le désintégrateur (19) et le déchiqueteur (21).

2. Dispositif selon la revendication 1, **caractérisé en ce que** le déchiqueteur (21) est un déchiqueteur à 2 arbres.

3. Dispositif selon la revendication 2, **caractérisé en ce que** le déchiqueteur à 2 arbres (21) comporte deux arbres (29), en particulier pouvant être entraînés en rotation en sens inverse, au moins sensiblement parallèles et comportant des éléments de coupe (33) pour le déchiquetage du toron (15).

4. Dispositif selon la revendication 3, **caractérisé en ce que** les éléments de coupe (33) sont amovibles des arbres (29) et/ou remplaçables, et/ou **en ce que** les arbres (29) du déchiqueteur (21) sont remplaçables.

5. Dispositif selon au moins l'une des revendications 2 à 4, **caractérisé en ce que** l'extrémité avant du toron (17) peut être transportée dans une zone du déchiqueteur (21) qui se trouve entre les deux arbres (29), et/ou **en ce que** le déchiqueteur (21) est disposé de sorte que les arbres (29) s'étendent au moins sensiblement parallèlement à une direction le long de laquelle l'extrémité avant du toron (17) est transportée et introduite dans le déchiqueteur (21).

6. Dispositif selon au moins l'une des revendications 2 à 5, **caractérisé en ce qu'**un entraînement (31) séparé, en particulier un entraînement électrique ou hydraulique, est prévu pour chaque arbre (29), les entraînements (31) pouvant de préférence être actionnés indépendamment les uns des autres.

7. Dispositif selon au moins l'une des revendications précédentes, **caractérisé en ce que** ledit dispositif comporte une commande (37) pour le dispositif de transport (13), dans lequel la commande (37) est conçue pour régler la vitesse de transport et/ou la direction de transport du toron (15) en fonction d'au moins un paramètre de fonctionnement du déchiqueteur (21).

8. Dispositif selon la revendication 7, **caractérisé en ce que** le paramètre de fonctionnement est la pression hydraulique de l'entraînement hydraulique (31) du déchiqueteur (21) et/ou le couple au niveau d'un arbre (29) du déchiqueteur (31) et/ou un paramètre électrique, en particulier le courant ou la tension, de l'entraînement électrique (31) du déchiqueteur (21).

9. Dispositif selon la revendication 8, **caractérisé en ce que** ledit dispositif comporte un dispositif de mesure (39) permettant de mesurer la pression hydraulique et/ou de mesurer le couple et/ou de mesurer le paramètre électrique.

10. Dispositif selon au moins l'une des revendications précédentes, **caractérisé en ce que** le dispositif de transport (13) comprend un tire-toron comportant un rouleau pouvant être entraîné et un contre-rouleau et est conçu de sorte que le toron (15) est transporté entre le rouleau et le contre-rouleau.

11. Dispositif selon au moins l'une des revendications précédentes, **caractérisé en ce qu'**aucun dispositif de coupe pour la séparation de l'extrémité avant du toron (17) du reste du toron (15) n'est prévu entre le dispositif de transport (13) et le déchiqueteur (21).

12. Dispositif selon au moins l'une des revendications précédentes, **caractérisé en ce que** ledit dispositif comporte un dispositif de guidage (27), en particulier une goulotte, entre le dispositif de transport (13) et le déchiqueteur (21), pour le guidage de l'extrémité avant du toron (17).

13. Dispositif selon au moins l'une des revendications précédentes, **caractérisé en ce que** la vitesse de rotation et/ou le sens de rotation d'au moins un arbre (29) du déchiqueteur (21) est réglé(e) en fonction du couple sur l'arbre (29) et/ou de la pression hydraulique de l'entraînement (31) de l'arbre (29), dans lequel un dispositif de mesure (39) est prévu de préférence pour mesurer le couple et/ou pour mesurer la pression hydraulique.

14. Dispositif selon au moins l'une des revendications précédentes, **caractérisé en ce qu'**un autre déchiqueteur, en particulier un déchiqueteur à 2 arbres, est disposé en aval du déchiqueteur (21).

15. Procédé de traitement d'un toron (15) formé dans un désintégrateur (19), en particulier au moyen d'un dispositif (11) selon au moins l'une des revendications précédentes, dans lequel le toron (15) est tiré par son extrémité avant (17) hors du désintégrateur (19) au moyen d'un dispositif de transport (13) du toron (15), en particulier d'un tire-toron, **caractérisé en ce que** le toron (15) est transporté par son extrémité avant (17) au moyen du dispositif de transport (13) et introduit directement dans un déchiqueteur (21).
